# EUROPÄISCHE PATENTSCHRIFT

(11) **EP 2 800 918 B1**
(45) Veröffentlichungstag und Bekanntmachung des Hinweises auf die Patenterteilung: **27.02.2019**
(21) Anmeldenummer: 12812621.6
(22) Anmeldetag: 20.12.2012
(51) Int. Cl.: F16K 41/02, F16K 41/04

(54) **SPINDELLAGERUNG FÜR EINE ABSPERRARMATUR**
SPINDLE BEARING FOR A SHUT-OFF VALVE
PALIER DE BROCHE POUR UN ROBINET D'ARRÊT

(30) Priorität: 05.01.2012 AT 122012
(43) Veröffentlichungstag der Anmeldung: 12.11.2014
(73) Patentinhaber: E. Hawle Armaturenwerke GmbH, 4840 Vöcklabruck (AT)
(72) Erfinder: BERGER, Christian, A-4650 Lambach (AT)
(74) Vertreter: Puchberger & Partner Patentanwälte
(86) Internationale Anmeldenummer: PCT/EP2012/076302
(87) Internationale Veröffentlichungsnummer: WO 2013/102565

(56) Entgegenhaltungen:
- EP-A1- 0 445 020
- EP-B1- 1 516 138
- DE-B- 1 026 146

## Beschreibung

Die Erfindung betrifft eine Spindellagerung für eine Absperrarmatur, umfassend einen Gehäusehals sowie einen mit dem Gehäusehals verbindbaren zylindrischen Dichtungsträger mit einer Öffnung zur axialen Aufnahme einer Schieberspindel, wobei zur Positionierung des Dichtungsträgers im Gehäusehals eine Bajonettverbindung vorgesehen ist.

Derartige Spindellagerungen mit Dichtungsträgern werden verwendet, um eine axial zentrierte Lagerung der Schieberspindel in Absperrarmaturen zu erreichen, wobei gleichzeitig eine Abdichtung der Absperrkammer gegen die Umwelt erreicht werden soll. Der Dichtungsträger muss stabil und robust ausgeführt sein und darf in seiner Position in der Absperrarmatur nicht verrutschen. Dennoch muss der Dichtungsträger derart ausgeführt sein, dass eine Entfernung zum Zweck der Wartung der Dichtungen oder der Schieberspindel schnell und einfach erfolgen kann.

In der Praxis stellt sich die Aufgabe, dass ein versehentliches Lösen des Dichtungsträgers unter allen Umständen verhindert werden muss. Eine möglichst robuste und auch bei massiver mechanischer Beanspruchung sicher sitzende Verbindung ist deshalb erforderlich.

Zu diesem Zweck ist es aus dem Stand der Technik bekannt, den Dichtungsträger mit einem Außengewinde zu versehen, um ein Einschrauben des Dichtungsträgers in ein Gewinde der Absperrarmatur zu ermöglichen.

Eine derartige Schraubverbindung stellt eine einfache, robuste und schnell lösbare Verbindung dar, welche jedoch in der Praxis den Nachteil aufweist, dass bei der Verschraubung eine Beschichtung der Absperrarmatur im Bereich des Armaturengehäuses abgenutzt wird. Korrosion in diesen mechanisch beanspruchten Bereichen ist die unmittelbare Folge.

Bei Schraubverbindungen sind nur sehr dünne Beschichtungen möglich, und nicht der im Armaturenbereich heute übliche "schwere Korrosionsschutz" mittels Pulverbeschichtung.

Zu diesem Zweck ist aus der EP 1 516 138 B1 ein Dichtungsträger bekannt, der in einem Gehäusehalsfortsatz der Absperrarmatur mittels einer Bajonett-Verriegelungsvorrichtung positionierbar ist.

Eine Bajonettverbindung hat den Vorteil, dass sie schnell positionierbar und wieder lösbar ist, und dass etwaige Beschichtungen auf der Absperrarmatur im Bereich der Verbindungsmittel der Bajonettverbindung bei fachgerechter Benutzung geschont werden. Sie hat jedoch im Vergleich zu einer Schraubverbindung mehrere Nachteile.

Beispielsweise kann es bei mechanischen Beanspruchungen vorkommen, dass sich die Bajonettverbindung löst und die Schieberspindel freigibt. Dies stellt ein massives Sicherheitsproblem dar.

Zum anderen kann durch die aus dem Stand der Technik bekannten Bajonettverbindungen nicht völlig sichergestellt werden, dass die Schieberspindel exakt zentriert im Mittelpunkt des Dichtungsträgers gehalten wird, da im Allgemeinen Bajonettverbindungen lediglich mit zwei, 180° versetzten Bajonettvorsprüngen bzw. Nasen versehen sind. Damit kann eine Zentrierung nur einer Orientierung erreicht werden.

Die nahe liegende Lösung, Bajonettverbindungen mit 3, um 120° versetzten Vorsprüngen, oder noch mehr Vorsprüngen zu versehen, greift insofern zu kurz, als damit einer axialen Verschiebung der Schieberspindel nicht entgegengewirkt werden kann, da die Fixierung lediglich in einer Ebene erfolgt.

Diese Probleme stellen sich bei der bekannten Lösung mittels Schraubgewinde nicht, wobei diese Lösung jedoch aus den oben genannten Gründen unerwünscht ist.

Somit besteht eine technische Aufgabe der Erfindung darin, einen Dichtungsträger bzw. eine Absperrarmatur mit einem derartigen Dichtungsträger zu schaffen, der die exakte Positionierung der Schieberspindel erlaubt, einfach und schnell zu Wartungszwecken lösbar ist, und auch für Armaturen verwendbar ist, die mit einer sensiblen Beschichtung versehen sind.

Diese Aufgabe wird insbesondere durch die Merkmale des Patentanspruchs 1 gelöst.

Die Ebenen sind vorzugsweise axial oder im Wesentlichen axial voneinander beabstandet. Dies ermöglicht erstmals, die Vorteile der bekannten Bajonettverbindung mit der bekannten Schraubverbindung zu kombinieren. Zum einen kann, wie bei der Bajonettverbindung in einer Ebene, die Verbindung schnell angebracht und wieder gelöst werden, ohne eine etwaige Beschichtung auf dem Dichtungsträger, der Absperrarmatur, oder beiden in Mitleidenschaft zu ziehen. Die Verbindung ist, aufgrund der mehrfachen Verbindungspunkte, stabil und robust und es besteht nicht die Gefahr, dass sich die Verbindung bei mechanischer Beanspruchung löst. Zum anderen ermöglicht das Vorsehen zumindest zweier unterschiedlicher Verbindungsebenen eine exakte Zentrierung der Schieberspindel im Mittelpunkt des Dichtungsträgers entlang der gesamten axialen Erstreckung der Schieberspindel.

Zur Bildung der Bajonettverbindung weist der Dichtungsträger an seinem äußeren Umfang zumindest einen ersten nach außen ragenden Vorsprung und zumindest einen zweiten nach außen ragenden Vorsprung auf, wobei die Vorsprünge in axialer Richtung zueinander versetzt angeordnet sind, und der Gehäusehals den Vorsprüngen zugeordnete Nuten und Haltelaschen aufweist.

Entsprechend dem bekannten Verfahren bei einer Bajonettverbindung wird der Dichtungsträger mit seinen Vorsprüngen in korrespondierende Nuten des Gehäusehalses eingesetzt und verdreht, wodurch die Vorsprünge des Dichtungsträgers in engen Kontakt mit den Haltelaschen des Gehäusehalses kommen und eine passgenaue Verbindung erreicht wird.

Durch das erfindungsgemäße Merkmal, dass die Vorsprünge bzw. Haltelaschen in axialer Richtung in zumindest zwei Ebenen vorgesehen sind, wird eine besonders robuste Verbindung erreicht, die insbesondere die Schieberspindel in axialer Richtung ausrichtet.

Die nach außen ragenden Vorsprünge des Dichtungsträgers können derart ausgeführt sein, dass sie entlang des äußeren Umfangs des Dichtungsträgers jeweils einen Winkel α von höchstens 180° überstreichen, um ein Einsetzen des Dichtungsträgers in den Gehäusehals, der mit korrespondierenden Nuten bzw. Haltelaschen ausgeführt ist, zu ermöglichen.

Durch die große Auflagefläche entlang des Umfangs des Dichtungsträgers (beinahe 360°) wird eine wesentliche Verbesserung der Stabilität der Verbindung gegenüber Beanspruchungen in axialer Richtung erreicht.

Sowohl die Vorsprünge des Dichtungsträgers als auch die Haltelaschen des Gehäusehalses können über tangential verlaufende Abschrägungen verfügen, um ein Einsetzen des Dichtungsträgers bei gleichzeitig möglichst ausgedehnten Vorsprüngen zu ermöglichen.

Der Dichtungsträger kann insbesondere ein erstes Paar nach außen ragender Vorsprünge und ein zweites Paar nach außen ragender Vorsprünge umfassen, die in axialer Richtung versetzt angeordnet sind, wobei die nach außen ragenden Vorsprünge entlang des äußeren Umfangs des Dichtungsträgers jeweils einen Winkel a von höchstens 90° überstreichen. Durch eine derartige paarweise Anordnung wird eine gute Zentrierung der Schieberspindel erreicht.

Die nach außen ragenden Vorsprünge können weiters auch in drei oder mehr voneinander in axialer Richtung beabstandeten Ebenen vorgesehen sein. Dadurch wird eine besonders gute Zentrierung der Schieberspindel erreicht. Die Position der Vorsprünge kann entsprechend angepasst sein, beispielsweise können die Vorsprünge der dritten Ebene wieder an der Position der ersten Ebene vorgesehen sein. Es kann erfindungsgemäß vorgesehen sein, dass die nach außen ragenden Vorsprünge jeweils einen Winkel α von höchstens 60° überstreichen. Es ist aber auch erfindungsgemäß vorgesehen, dass die Vorsprünge der einzelnen Ebenen jeweils unterschiedliche Winkelbereiche überstreichen.

Der Dichtungsträger kann aus Messing, beschichtetem Metall, Kunststoff oder Edelstahl gefertigt sein. Der Dichtungsträger kann insbesondere eine korrosionshemmende Beschichtung aufweisen. Der Dichtungsträger kann eine Verdrehsicherung umfassen. Die Verdrehsicherung kann in Form einer Fixierschraube, die in eine Öffnung in einer Ausnehmung des Dichtungsträgers eingeschraubt wird, ausgeführt sein.

Der Dichtungsträger kann an seinem inneren Umfang über mindestens einen Innendichtsatz verfügen. Der Dichtungsträger kann an seinem äußeren Umfang über mindestens einen Außendichtsatz verfügen. Insbesondere kann vorgesehen sein, dass der Dichtungsträger über zwei in axialer Richtung versetzte Innendichtsätze und einen Außendichtsatz verfügt.

Die Vorsprünge können konisch abgeschrägte erste Halteflächen aufweisen, die mit einem Normalenvektor der äußeren Umfangsfläche des Dichtungsträgers einen Winkel β kleiner 45°, vorzugsweise 5° bis 20°, einschließen. Diese Halteflächen können mit den entsprechenden Haltelaschen des Gehäusehalses derart zusammenarbeiten, dass eine möglicht passgenaue Verbindung erreicht wird. Eine ähnliche Wirkung wie durch abgeschrägte Halteflächen kann durch konturierte Radien erreicht werden.

Die Haltelaschen des Gehäusehalses können ebenfalls konisch abgeschrägte zweite Halteflächen aufweisen, die mit einem Normalenvektor der inneren Umfangsfläche des Gehäusehalses einen Winkel β kleiner 45°, vorzugsweise 5° bis 20°, einschließen. Dadurch wird eine besonders gute Verbindung mit den Vorsprüngen des Dichtungsträgers erreicht.

Der Gehäusehals kann aus Gusseisen, Buntmetall oder Edelstahl hergestellt sein. Der Gehäusehals und/oder der Dichtungsträger kann eine korrosionshemmende Beschichtung aufweisen. Die Beschichtung kann als Epoxy Pulverbeschichtung mit einer Schichtdicke von 200µm bis 400 µm, vorzugsweise 300µm, ausgeführt sein. Bei der Beschichtung kann es sich um eine GSK Pulverbeschichtung handeln. Die Beschichtung kann insbesondere im Bereich der Haltelaschen vorgesehen sein.

Weitere erfindungsgemäße Merkmale ergeben sich aus den Ansprüchen, den Ausführungsbeispielen und den Zeichnungen.

Nunmehr soll die Erfindung anhand der beiliegenden Zeichnungen, die eine bevorzugte Ausführungsform der Erfindung zeigen, erläutert werden.

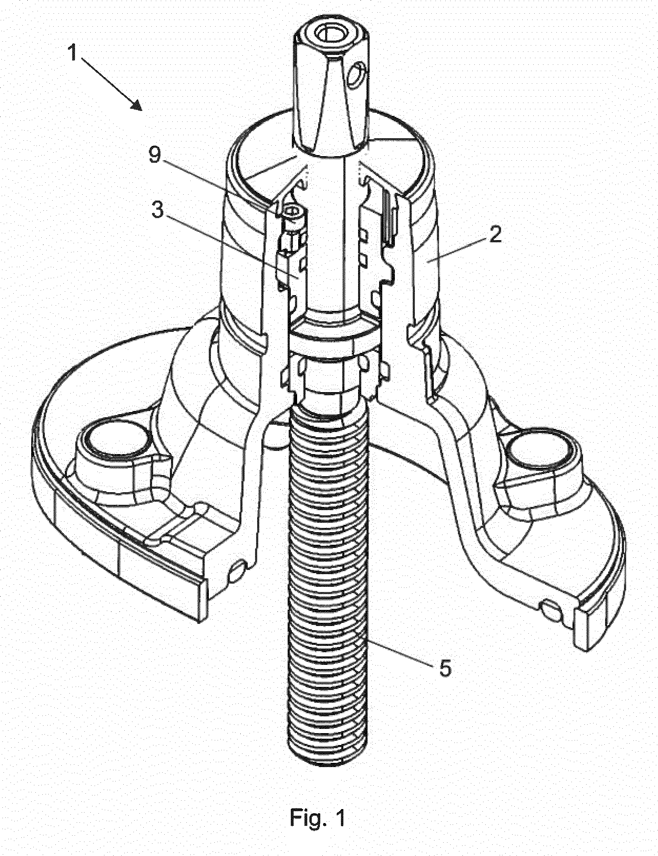

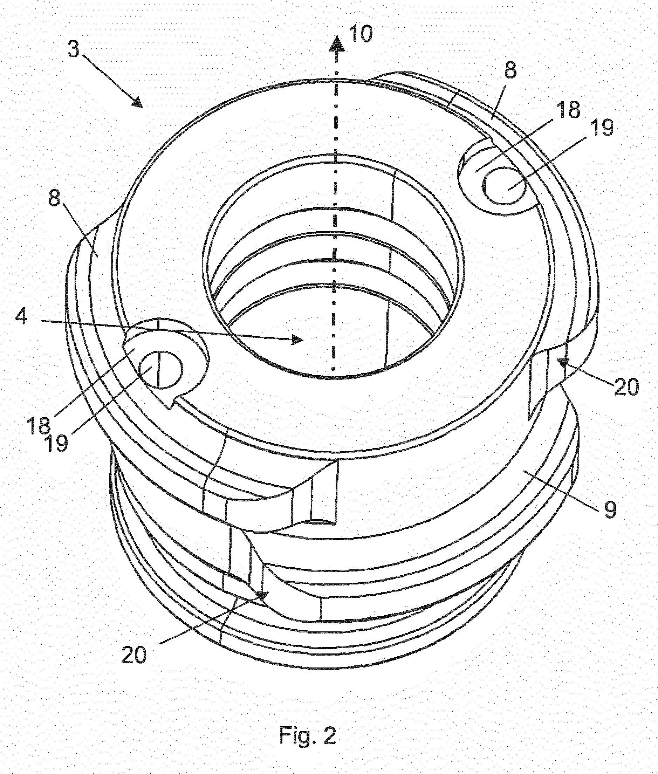

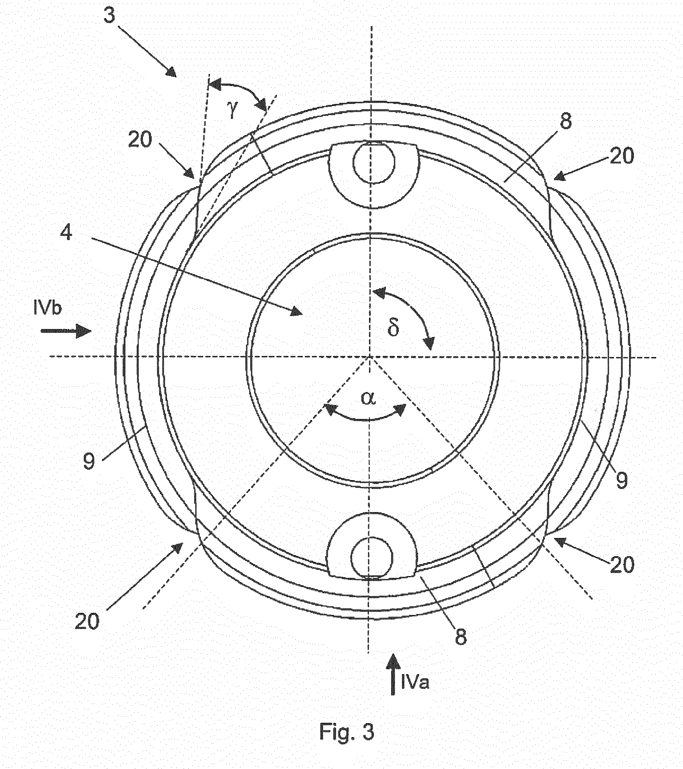

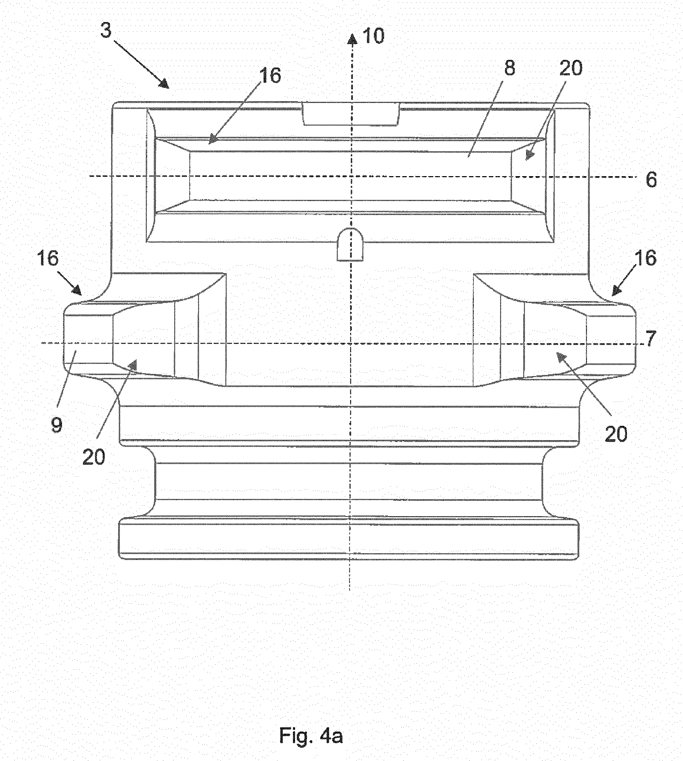

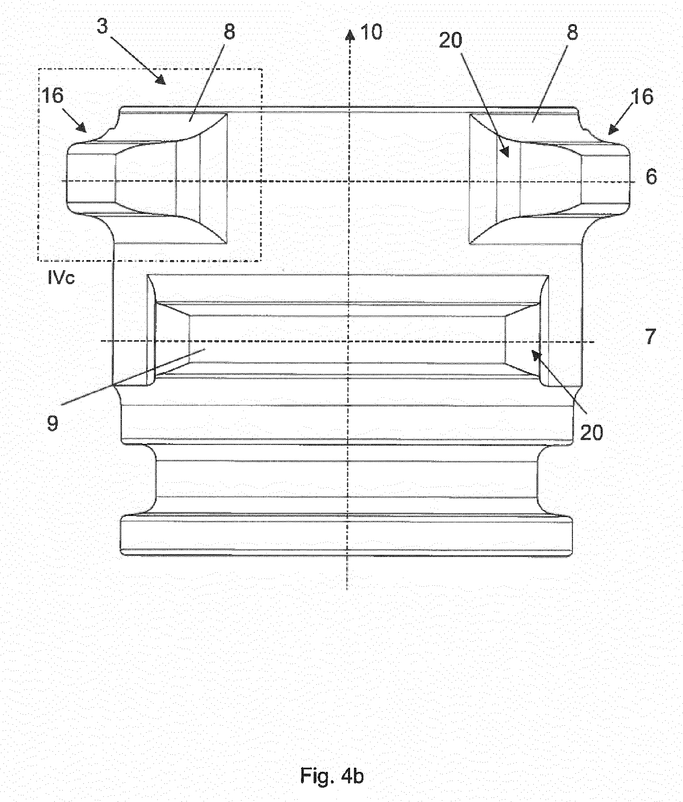

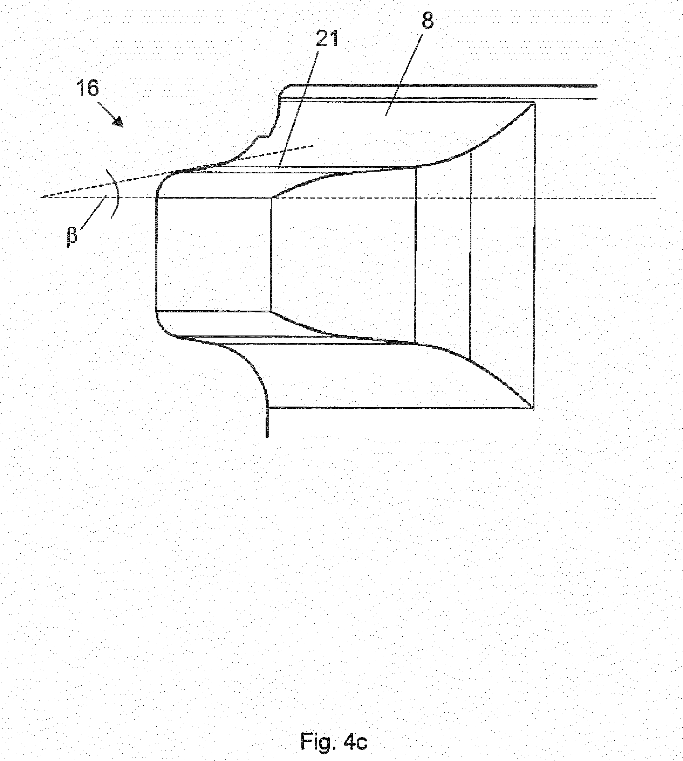

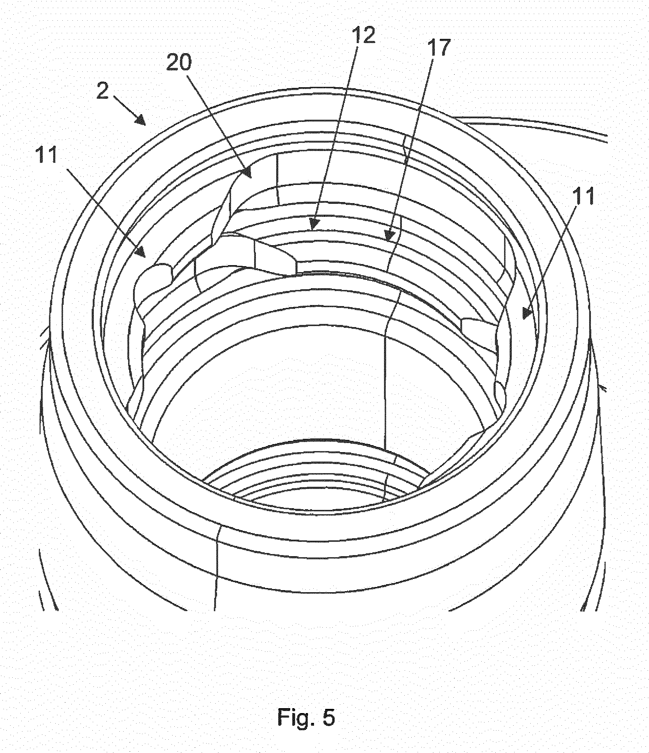

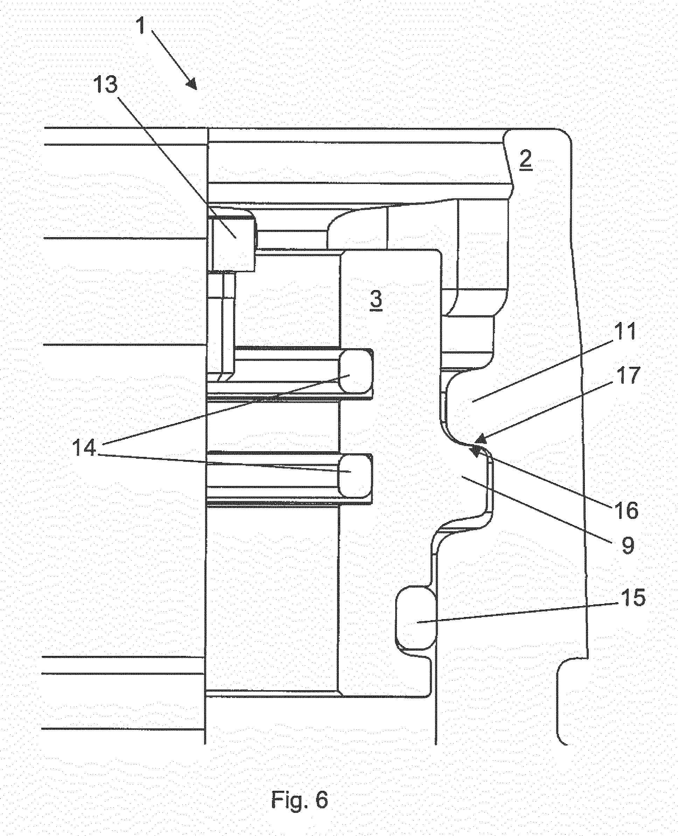

Dabei zeigt die Fig. 1 ein Ausführungsbeispiel einer erfindungsgemäßen Spindellagerung in dreidimensionaler Ansicht, Fig. 2 eine dreidimensionale Darstellung des erfindungsgemäßen Dichtungsträgers, Fig. 3 eine Aufsicht auf den erfindungsgemäßen Dichtungsträger, Fig. 4a und 4b den erfindungsgemäßen Dichtungsträger in zwei weiteren Ansichten wie in Fig. 3 angedeutet, Fig. 4c ein Detail aus Fig. 4b, Fig. 5 eine dreidimensionale Ansicht des erfindungsgemäßen Gehäusehalses ohne eingesetztem Dichtungsträger, und Fig. 6 einen teilweisen Querschnitt durch die Absperrarmatur im Bereich des Gehäusehalses mit eingesetztem Dichtungsträger.
Fig. 1 zeigt eine dreidimensionale Ansicht eines Ausführungsbeispiels einer erfindungsgemäßen Spindellagerung 1. Der Gehäusehals 2 ist mit einem erfindungsgemäßen Dichtungsträger 3 verbunden, in den eine Schieberspindel 5 eingesetzt ist. Der Dichtungsträger 3 ist über eine in zwei Ebenen wirksame Bajonettverbindung mit dem Gehäusehals verbunden und mit einer Verdrehsicherung 9 gesichert.
Fig. 2 zeigt ein Ausführungsbeispiel des erfindungsgemäßen Dichtungsträgers 3 in dreidimensionaler Ansicht. Der Dichtungsträger 3 verfügt über eine Öffnung 4 zum Einführen einer Schieberspindel. An seinem äußeren Umfang verfügt der Dichtungsträger 1 über zwei erste Vorsprünge 8 und zwei zweite Vorsprünge 9. Die beiden Vorsprünge 8 sind gegeneinander entlang des Umfangs des Dichtungsträgers um 180° versetzt, ebenso die beiden Vorsprünge 9. Weiters sind die ersten Vorsprünge 8 von den zweiten Vorsprüngen 9 um jeweils etwa 90° gegeneinander versetzt und entlang einer axialen Richtung 10 voneinander beabstandet. Zur Fixierung des eingesetzten Dichtungsträgers sind Ausnehmungen 18 mit Öffnungen 19 zum Einfügen von Verdrehsicherungen (nicht dargestellt) vorgesehen. Die Vorsprünge 8, 9 verfügen über tangentiale Abschrägungen 20 um das Einsetzen in den Gehäusehals zu erleichtern.

Der Gehäusehals (nicht gezeigt) verfügt über komplementäre, etwa 90° gegeneinander versetzte Haltelaschen in zwei axial beabstandeten Ebenen, um ein Einführen und Befestigen des Dichtungsträgers zu ermöglichen. Dabei wird berücksichtigt, dass ein gewisses Spiel zum Einbau und für die Herstellung (Entformwinkel) notwendig ist.

In einem konkreten Ausführungsbeispiel ist bei einem Gesamtdurchmesser des Dichtungsträgers von 42,5mm eine Breite der Vorsprünge von 35mm vorgesehen.

Fig. 3 zeigt eine Aufsicht auf den erfindungsgemäßen Dichtungsträger 3. Es ist ersichtlich dass die Vorsprünge 8 von den Vorsprüngen 9 jeweils um einen Winkel δ von etwa 90° versetzt angeordnet sind. Jeder der Vorsprünge 8, 9 überstreicht entlang des Umfangs einen Winkel α von etwas weniger als 90°. Die Vorsprünge 8, 9 sind weiters mit abgeschrägten Bereichen 20 ausgeführt, um ein leichteres Einführen des Dichtungsträgers in den Gehäusehals zu ermöglichen. Die abgeschrägten Bereiche 20 ergeben sich durch eine Fortführung des Umfangs in einem Winkel γ im Bereich von 10° bis 45° abweichend von der tangentialen Richtung.

Weiters können Bajonette mit mehr als zwei Vorsprüngen je Ebene vorgesehen sein. So ist beispielsweise eine Ausführungsform vorgesehen, die in jeder der zwei oder mehr Ebenen jeweils drei Vorsprünge aufweist, die jeweils einen Winkelbereich von etwa 60° überstreichen und um 120° versetzt sind.

Die Vorsprünge jeder Ebene sind dann zu den Vorsprüngen der nächsten Ebene axial beabstandet und um etwa 60° radial versetzt. Wird in dieser Ausführungsform eine dritte Ebene vorgesehen, so befinden sich die Vorsprünge dieser dritten Ebene radial wieder an der gleichen Position wie die Vorsprünge der ersten Ebene, jedoch axial von diesen beabstandet.

Fig. 4a zeigt eine weitere Ansichten des Ausführungsbeispiels aus Fig. 3 entlang der Ansicht IVa. Die Vorsprünge 8 sind in einer ersten Ebene 6 angeordnet, während die Vorsprünge 9 in einer zweiten Ebene 7 angeordnet sind. Die Ebene 6 ist von der Ebene 7 beabstandet.

Die Vorsprünge 8, 9 verfügen über konisch abgeschrägte erste Halteflächen 16, um eine bessere Halterung des Dichtungsträgers zu erreichen und eine genaue Justierung und Zentrierung der Schieberspindel zu ermöglichen.

Fig. 4b zeigt ebenfalls eine Ansicht des Ausführungsbeispiels aus Fig. 3 entlang der Ansicht IVb. Wiederum sind die Vorsprünge 8 sind in einer ersten Ebene 6 angeordnet, während die Vorsprünge 9 in einer zweiten Ebene 7 angeordnet sind. Die Ebene 6 ist von der Ebene 7 beabstandet. Ersichtlich sind ebenfalls die abgeschrägten Bereiche 20 sowohl bei den Vorsprüngen 8 als auch bei den Vorsprüngen 9.

Die Höhe bzw. Dicke der Vorsprünge 8, 9 kann prinzipiell konstruktiv gewählt werden. Selbstverständlich muss der Abstand der Bajonettebenen 6, 7 im Dichtungsträger und im Gehäusehals übereinstimmen. In einem Ausführungsbeispiel ist ein Abstand von 14,5mm vorgesehen, wobei die Höhe der Vorsprünge am äußersten Umfang 6mm beträgt. Eine Vergrößerung des Abstands führt zu einer besseren axialen Zentrierung der Schieberspindel, während eine Verkleinerung eine Materialeinsparung beim Dichtungsträger zur Folge hat.

Die Grenze bei der Verkleinerung liegt bei der kleinsten sinnvollen Bauteilgröße und bei der Höhe der Vorsprünge.

In diesem Ausführungsbeispiel sind die Höhe der Vorsprünge im Dichtungsträger etwa gleich wie die Höhe der Haltelaschen im Gehäusehals, was durch die ähnliche Materialfestigkeit des Dichtungsträgers (Messing) und des Gehäusehalses (Gusseisen) begründet ist.

Bei unterschiedlichen Materialien (z.B. Kunststoff und Metall) müssten entsprechende Verschiebungen erfolgen.

Fig. 4c zeigt einen Detailausschnitt aus Fig. 4b. Die ersten Halteflächen 16 sind aus mehreren Teilbereichen zusammengesetzt und umfassen einen linear verlaufenden Bereich 21, der an zwei gekrümmte Bereiche anschließt. Der lineare Bereich dient zur besseren Fixierung des Dichtungsträgers im Gehäusehals und zur Justierung des Dichtungsträgers. Er kann mit einer speziellen Beschichtung versehen sein. Der linear verlaufende Bereich weist gegenüber einem Normalenvektor der äußeren Umfangsfläche einen Winkel β im Bereich von 5° bis 20°, vorzugsweise 10° auf. Höhere Winkel sind vorgesehen, führen jedoch zu vermehrten geometrischen Problemen bei der Bauhöhe. Ein Winkel von 45° sollte nicht überschritten werden. Kleinere Winkel verringern die Wirkung der Zentrierung des Bauteils zur Mitte.

Fig. 5 zeigt eine dreidimensionale Ansicht des Gehäusehalses 2, wobei der Dichtungsträger 1 entfernt wurde. Der Gehäusehals 2 hat an seinem inneren Umfang erste Haltelaschen 11 und zweite Haltelaschen 12, die sowohl in Umfangsrichtung, als auch axial versetzt sind, um eine Bajonettverbindung mit dem oben beschriebenen Dichtungsträger zu ermöglichen. Die Haltelaschen weisen zweite Halteflächen 17 auf, um ein passgenaues Einsetzen und Justieren des Dichtungsträgers zu ermöglichen. Die zweiten Halteflächen 17 können insbesondere an der (nicht dargestellten) Unterseite über mehrere Teilbereiche verfügen, die mit der analog ausgestalteten ersten Haltefläche des Dichtungsträgers zusammenwirken. Eine Beschichtung kann ebenfalls vorgesehen sein.

Fig. 6 zeigt einen teilweisen Querschnitt durch die erfindungsgemäße Spindellagerung 1. Gezeigt ist ein Gehäusehals 2 mit eingesetztem Dichtungsträger 3. Der Dichtungsträger 3 verfügt an seinem inneren Umfang über zwei Innendichtsätze 14 und einen Außendichtsatz 15. Diese Dichtsätze sind als O-Ringe ausgeführt. Weiters ist der Dichtungsträger 3 über die Verdrehsicherung 13 in Form einer Schraube gegen unbeabsichtigtes Verdrehen gesichert. Der zweite Vorsprung 9 des Dichtungsträgers 3 liegt bei arretiertem Bajonettverschluss direkt an der Haltelasche 11 des Gehäusehalses 2 an, wobei eine feste Verbindung erzielt wird, ohne dass die Beschichtung des Gehäusehalses 2 zu Schaden kommt. Die erste Haltefläche 16 und die zweite Haltefläche 17 berühren sich.

Die Erfindung ist nicht auf die gezeigte Ausführungsform beschränkt, sondern umfasst auch Ausführungsformen mit Vorsprüngen in drei oder mehr axial versetzten Ebenen. Auch können in jeder Ebene nicht nur zwei um 180° versetzte Vorsprünge, sondern auch 3 um 120°, 4 um 90°, 5 um 72°, etc. versetzte Vorsprünge verwendet werden. Der je Vorsprung in Umfangsrichtung überstrichene Bereich ist jeweils etwas kleiner als dieser Versetzungswinkel, um ein leichtes Einsetzen des Dichtungsträgers zu ermöglichen.

### Bezugszeichenliste

- 1: Spindellagerung
- 2: Gehäusehals
- 3: Dichtungsträger
- 4: Öffnung
- 5: Schieberspindel
- 6: Erste Ebene
- 7: Zweite Ebene
- 8: Erster Vorsprung
- 9: Zweiter Vorsprung
- 10: Axiale Richtung
- 11: Erste Haltelasche
- 12: Zweite Haltelasche
- 13: Verdrehsicherung
- 14: Innendichtsatz
- 15: Außendichtsatz
- 16: Erste Haltefläche
- 17: Zweite Haltefläche
- 18: Ausnehmungen
- 19: Öffnungen
- 20: Abschrägung
- 21: Linear verlaufender Bereich

## Patentansprüche

1. Spindellagerung (1) für eine Absperrarmatur, umfassend einen Gehäusehals (2) sowie einen mit dem Gehäusehals (2) verbindbaren zylindrischen Dichtungsträger (3) mit einer Öffnung (4) zur axialen Aufnahme einer Schieberspindel (5), wobei zur Positionierung des Dichtungsträgers (3) im Gehäusehals (2) eine Bajonettverbindung vorgesehen ist,
**dadurch gekennzeichnet, dass**
die Bajonettverbindung derart ausgeführt ist, dass der Dichtungsträger (3) in zumindest zwei voneinander beabstandeten Ebenen (6, 7) im Gehäusehals (2) fixierbar ist, und dass zur Bildung der Bajonettverbindung der Dichtungsträger (3) an seinem äußeren Umfang zumindest einen ersten nach außen ragenden Vorsprung (8) und zumindest einen zweiten nach außen ragenden Vorsprung (9) aufweist, wobei die Vorsprünge (8, 9) in axialer Richtung (10) zueinander versetzt angeordnet sind, und der Gehäusehals (2) den Vorsprüngen (8, 9) zugeordnete Nuten und Haltelaschen (11, 12) aufweist.

2. Spindellagerung nach Anspruch 1, **dadurch gekennzeichnet, dass** die nach außen ragenden Vorsprünge (8, 9) entlang des äußeren Umfangs des Dichtungsträgers (3) jeweils einen Winkel α von höchstens 180° überstreichen.

3. Spindellagerung nach Anspruch 1, **dadurch gekennzeichnet, dass** der Dichtungsträger (3) ein erstes Paar nach außen ragender Vorsprünge (8) und ein zweites Paar nach außen ragender Vorsprünge (9) umfasst, die in axialer Richtung (10) versetzt angeordnet sind, wobei die nach außen ragenden Vorsprünge (8, 9) entlang des äußeren Umfangs des Dichtungsträgers (3) jeweils einen Winkel α von höchstens 90° überstreichen.

4. Spindellagerung nach einem der Ansprüche 1 bis 3, **dadurch gekennzeichnet, dass** nach außen ragende Vorsprünge in drei oder mehr voneinander in axialer Richtung (10) beabstandeten Ebenen vorgesehen sind.

5. Spindellagerung nach Anspruch 4, **dadurch gekennzeichnet, dass** die nach außen ragenden Vorsprünge jeweils einen Winkel α von höchstens 60° überstreichen.

6. Spindellagerung nach einem der vorhergehenden Ansprüche, **dadurch gekennzeichnet, dass** der Dichtungsträger (3) aus Messing, beschichtetem Metall, Kunststoff oder Edelstahl gefertigt ist.

7. Spindellagerung nach einem der vorhergehenden Ansprüche, **dadurch gekennzeichnet, dass** der Dichtungsträger (3) eine Verdrehsicherung (13) umfasst.

8. Spindellagerung nach einem der vorhergehenden Ansprüche, **dadurch gekennzeichnet, dass** der Dichtungsträger (3) an seinem inneren Umfang über mindestens einen Innendichtsatz (14) verfügt.

9. Spindellagerung nach einem der vorhergehenden Ansprüche, **dadurch gekennzeichnet, dass** der Dichtungsträger (3) an seinem äußeren Umfang über mindestens einen Außendichtsatz (15) verfügt.

10. Spindellagerung nach einem der Ansprüche 1 bis 9, **dadurch gekennzeichnet, dass** die Vorsprünge (8, 9) konisch abgeschrägte erste Halteflächen (16) aufweisen, die mit einem Normalenvektor der äußeren Umfangsfläche des Dichtungsträgers (3) einen Winkel β kleiner 45°, vorzugsweise 5° bis 20°, einschließen.

11. Spindellagerung nach einem der Ansprüche 1 bis 10, **dadurch gekennzeichnet, dass** die Aufnahmenuten (11, 12) des Gehäusehalses (2) konisch abgeschrägte zweite Halteflächen (17) aufweisen, die mit einem Normalenvektor der inneren Umfangsfläche des Gehäusehalses (2) einen Winkel β kleiner 45°, vorzugsweise 5° bis 20°, einschließen.

12. Absperrarmatur mit einer Spindellagerung nach einem der vorhergehenden Ansprüche, **dadurch gekennzeichnet, dass** der Gehäusehals (2) aus Gusseisen, Buntmetall oder Edelstahl hergestellt ist.

13. Absperrarmatur mit einer Spindellagerung nach einem der vorhergehenden Ansprüche, **dadurch gekennzeichnet, dass** der Gehäusehals (2) und/oder der Dichtungsträger (3) eine korrosionshemmende Beschichtung aufweist.

14. Absperrarmatur mit einer Spindellagerung nach Anspruch 13, **dadurch gekennzeichnet, dass** die Beschichtung als Epoxy Pulverbeschichtung mit einer Schichtdicke von 200µm bis 400 µm, vorzugsweise 300µm, ausgeführt ist.

## Claims

1. Spindle bearing (1) for an isolation valve, comprising a housing neck (2) as well as a cylindrical seal carrier (3) which can be connected to the housing neck (2) and has an opening (4) for axially receiving a gate spindle (5) wherein for positioning the seal carrier (3) in the housing neck (2) a bayonet connection is provided
**characterised in that**
the bayonet connection is configured in such a way that the seal carrier (3) is fixable in at least two planes (6, 7) at a distance from one another in the housing neck (2) and **in that** to form the bayonet connection the seal carrier (3) has on its outer circumference at least one first outwardly protruding projection (8) and at least one second outwardly protruding projection (9), wherein the projections (8, 9) are axially offset relative to each other in the axial direction (10) and the housing neck (2) has grooves and retaining plates (11, 12) assigned to the projections (8, 9).

2. Spindle bearing according to claim 1 **characterised in that** the outwardly protruding projections (8, 9) each cover an angle α of at most 180° along the outer circumference of the sealing carrier (3).

3. Spindle bearing according to claim 1 **characterised in that** the sealing carrier (3) comprises a first pair of outwardly protruding projections (8) and a second pair of outwardly protruding projections (9), which are arranged axially offset relative to each other in the axial direction (10) wherein the outwardly protruding projections (8, 9) each cover an angle α of at most 90° along the outer circumference of the sealing carrier (3).

4. Spindle bearing according to one of claims 1 to 3 **characterised in that** the outwardly protruding projections are provided in three or more planes at a distance from one another in the axial direction (10).

5. Spindle bearing according to claim 4 **characterised in that** the outwardly protruding projections (8, 9) each cover an angle α of at most 60°.

6. Spindle bearing according to any one of the preceding claims **characterised in that** the sealing carrier (3) is made of brass, coated metal, plastic or stainless steel.

7. Spindle bearing according to any one of the preceding claims **characterised in that** the sealing carrier (3) comprises an anti-rotation lock (13).

8. Spindle bearing according to any one of the preceding claims **characterised in that** the sealing carrier (3) has at least one inner sealing set (14) on its inner circumference.

9. Spindle bearing according to any one of the preceding claims **characterised in that** the sealing carrier (3) has at least one outer sealing set (15) on its outer circumference.

10. Spindle bearing according to any one of claims 1 to 9 **characterised in that** the projections (8, 9) have conically chamfered first retaining surfaces (16), which with a normal vector of the outer circumference area of the sealing carrier (3) enclose an angle β of less than 45°, preferably 5° to 20°.

11. Spindle bearing according to any one of claims 1 to 10 **characterised in that** the receiving grooves (11, 12) of the housing neck (2) have conically chamfered second retaining surfaces (17) which with a normal vector of the inner circumference area of the housing neck (2) enclose an angle β of less than 45°, preferably 5° to 20°.

12. Isolation valve with a spindle bearing according to any one of the preceding claims **characterised in that** he housing neck (2) is made of cast iron, non-ferrous metal or stainless steel.

13. Isolation valve with a spindle bearing according to any one of the preceding claims **characterised in that** the housing neck (2) and/or the sealing carrier (3) has a corrosion-inhibiting coating.

14. Isolation valve with a spindle bearing according to claim 13 **characterised in that** the coating is in the form of an epoxy power coating with a layer thickness of 200 µm to 400 pm, preferably 300 pm.

## Revendications

1. Logement de tige (1) pour une vanne d'arrêt, comprenant un col de boîtier (2) ainsi qu'un support de joint (3) cylindrique pouvant être relié au col de boîtier (2) avec une ouverture (4) pour le logement axial d'une tige de vanne (5), un raccord à baïonnette pour le positionnement du support de joint (3) étant prévu dans le col de boîtier (2),
**caractérisé en ce que**
le raccord à baïonnette est exécuté de telle sorte que le support de joint (3) peut être fixé dans le col de boîtier (2) dans au moins deux plans (6, 7) distants l'un de l'autre et **en ce que** pour former le raccord à baïonnette, le support de joint (3) comporte sur sa périphérie extérieure au moins une première saillie (8) ressortant vers l'extérieur et au moins une deuxième saillie (9) ressortant vers l'extérieur, les saillies (8, 9) étant disposées décalées l'une par rapport à l'autre en direction axiale (10) et le col de boîtier (2) comportant des rainures et colliers de retenue (11, 12) attribués aux saillies (8, 9).

2. Logement de tige selon la revendication 1, **caractérisé en ce que** les saillies (8, 9) faisant saillie vers l'extérieur couvrent respectivement un angle α d'un maximum de 180° le long de la périphérie extérieure du support de joint (3).

3. Logement de tige selon la revendication 1, **caractérisé en ce que** le support de joint (3) comprend une première paire de saillies (8) ressortant vers l'extérieur et une deuxième paire de saillies (9) ressortant vers l'extérieur, qui sont disposées décalées en direction axiale (10), les saillies (8, 9) ressortant vers l'extérieur recouvrant respectivement un angle α d'un maximum de 90° le long de la périphérie extérieure du support de joint (3).

4. Logement de tige selon l'une quelconque des revendications 1 à 3, **caractérisé en ce que** des saillies ressortant vers l'extérieur sont prévues dans trois plans ou plus distants l'un de l'autre dans la direction axiale (10).

5. Logement de tige selon la revendication 4, **caractérisé en ce que** les saillies (8, 9) ressortant vers l'extérieur recouvrent respectivement un angle α maximal de 60°.

6. Logement de tige selon l'une quelconque des revendications précédentes, **caractérisé en ce que** le support de joint (3) est fabriqué en laiton, en métal revêtu, en matière plastique ou en acier spécial.

7. Logement de tige selon l'une quelconque des revendications précédentes, **caractérisé en ce que** le support de joint (3) comprend une sécurité anti-rotation (13) .

8. Logement de tige selon l'une quelconque des revendications précédentes, **caractérisé en ce que** le support de joint (3) dispose sur sa périphérie intérieure d'au moins un ensemble d'étanchéité intérieur (14).

9. Logement de tige selon l'une quelconque des revendications précédentes, **caractérisé en ce que** le support de joint (3) dispose sur sa périphérie extérieure d'au moins un ensemble d'étanchéité extérieur (15).

10. Logement de tige selon l'une quelconque des revendications 1 à 9, **caractérisé en ce que** les saillies (8, 9) comportent des premières surfaces de retenue (16) à chanfrein conique, qui forment un angle β inférieur à 45°, de préférence de 5 à 20°, avec un vecteur normal de la surface périphérique extérieure du support de joint (3).

11. Logement de tige selon l'une quelconque des revendications 1 à 10, **caractérisé en ce que** les rainures de réception (11, 12) du col de boîtier (2) comportent des deuxièmes surfaces de retenue (17) à chanfrein conique, qui forment un angle β inférieur à 45°, de préférence de 5° à 20°, avec un vecteur normal de la surface périphérique intérieure du col de boîtier (2).

12. Vanne d'arrêt avec un logement de tige selon l'une quelconque des revendications précédentes, **caractérisée en ce que** le col de boîtier (2) est fabriqué en fonte, en métal non ferreux ou en acier spécial.

13. Vanne d'arrêt avec un logement de tige selon l'une quelconque des revendications précédentes, **caractérisée en ce que** le col de boîtier (2) et/ou le support de joint (3) comporte un revêtement anticorrosion.

14. Vanne d'arrêt avec un logement de tige selon la revendication 13, **caractérisée en ce que** le revêtement est exécuté sous la forme d'un revêtement pulvérulent époxy avec une épaisseur de couche de 200 µm à 400 pm, de préférence 300 pm.
